# EUROPEAN PATENT SPECIFICATION

(11) **EP 1 419 190 B1**
(45) Date of publication and mention of the grant of the patent: **06.04.2011**
(21) Application number: 02794918.9
(22) Date of filing: 15.08.2002
(51) Int. Cl.: C08G 18/63, C08G 18/50, C08G 18/40, C08G 65/26

(54) **PROCESS TO MANUFACTURE POLYURETHANE PRODUCTS USING POLYMER POLYOLS IN WHICH THE CARRIER POLYOL IS A TERTIARY AMINO BASED POLYOL**
VERFAHREN ZUR HERSTELLUNG VON POLYURETHANPRODUKTEN UNTER VERWENDUNG VON POLYMERPOLYOLEN, WORIN ES SICH BEI DEM TRÄGERPOLYOL UM EIN AUF TERTIÄREM AMIN BASIERENDES POLYOL HANDELT
PROCEDE DE FABRICATION DE PRODUITS EN POLYURETHANNE A PARTIR DE POLYOLS POLYMERES DANS LESQUELS LE MOTIF POLYOL EST UN POLYOL A BASE D'AMINE TERTIAIRE

(30) Priority: 15.08.2001 US 312575 P
(43) Date of publication of application: 19.05.2004
(73) Proprietor: DOW GLOBAL TECHNOLOGIES INC., Midland MI 48674 (US)
(72) Inventor: VAN DER WAL, Hanno, R., NL-4542 BP Hoek (NL); CASATI, François M., F-01280 Prevessin-Moens (FR); HERRINGTON, Ronald, M., Brazoria, TX 77422 (US); WOODS, Thomas, J., CH-1276 Gingins (CH)
(74) Representative: Raynor, John
(86) International application number: PCT/US2002/026223
(87) International publication number: WO 2003/016373

(56) References cited:
- US-A- 4 785 127
- US-A- 5 476 969
- US-A- 6 060 531

## Description

The present invention pertains to a process to manufacture copolymer polyols using tertiary amine based carrier polyols and to polyurethane products made therefrom.

Polyurethane products are made by the polymerization of polyether and/or polyester polyols with isocyanates. A special class of polyols are the copolymer polyols made from polymerization of ethylenically unsaturated monomers (typically styrene and/or acrylonitrile), PHD (polyurea or poly-harnstoff dispersion), PIPA (polyisocyanate polyaddition), polyepoxide or polyisocyanurate, which are dispersed into conventional carrier polyols. Carrier polyols can be both feedstock polyols, that is polyols which are added to the reactor before and/or during the polymerization of the solid particles, and diluent polyol which is added to the feedstock polyol after this polymerization. Polyurethane systems generally contain additional components such as cross-linkers, chain extenders, surfactants, cell regulators, stabilizers, antioxidants, flame retardant additives, fillers, and typically catalysts such as tertiary amines and organometallic salts. Freshly prepared foams using typical tertiary amine catalysts, particularly in flexible, semi-rigid and rigid foam applications, often exhibit an odor typical of amines. The tertiary amine catalysts present in polyurethane foams have also been linked to the staining of vinyl film and degradation of polycarbonate sheets. This PVC staining and polycarbonate decomposition problems are especially prevalent in environments wherein elevated temperatures exist for long periods of time, such as in automobile interiors, which favor emission of amine vapors.

To address deficiencies of tertiary amine catalysts, pre-polymerization of reactive amine catalysts with a polyisocyanate and a polyol is reported in PCT WO 94/02525. These isocyanate-modified amine polyols show comparable or enhanced catalytic activity compared with the corresponding non-modified (reacted) amine catalysts only when blended with the polyol. However, this process results in handling difficulties such as gel formation and poor storage stability.

Modification of polyols by partial amination at the terminal polymer ends is disclosed in U.S. Patent 3,838,076. While this modification gives additional reactivity to the polyol, such polyols do not allow for adjustment of processing conditions since these aminated functions are rapidly tied-up in the polymer by reacting with the isocyanate. Hence they give fast initiation of the reactions but-subsequently lose most of their catalytic activity and do not provide proper final curing.

Use of specific amine-initiated polyols at high concentrations is proposed in-EP 539,819 and at low concentration in U.S. Patent 5,672,636 as preferably applied to semi-rigid and rigid polyurethane foam productions. EP 84,141 discloses a process for the production of low viscosity, readily processable polymer-modified polyethers, characterized in that the polyether polyamine contains terminal aromatic amino groups. However, it is well known to those skilled in the art that aromatic polyamine polyols do not have good catalytic activity.

Graft polymer dispersions are described in US 4,690,956 wherein specific amines are used as chain transfer agents or reaction moderators to control the free radical initiation and propagation of the polyurethane polymerization reaction. Other amines are described as potential polyol initiators, see U.S. Patents 3,652,639, 4,286,074 and 4,458,038. However high levels of fugitive, migratory amines are used with such dispersions. Hence this technology does not provide for a reduction of amine catalyst emissions.

In addition to the use of tertiary amines as catalyst, a tin catalyst, such as stannous octoate or dibutyltin dilaurate (DBTDL) is used in the production of polyurethane based products. The addition of a tin catalsyt provides for the gelling, that is polyol-isocyanate, reaction. These catalysts can be detrimental to the properties of the finished foam.

While WO 00/73,364 discloses that such tin catalysts may not be required when producing a PIPA based co-polymer polyol, the reaction conditions specify heating the raw materials to high temperature, that is above 60°C, activating the polymerization reaction with heat instead of catalyst.

Therefore, there continues to be a need to reduce or to eliminate amine and tin salt catalysts in producing polyurethane products.

It is an object-of the present invention to produce polyurethane products with reduced levels of tertiary amine and/or tin salt catalysts. With the elimination or reduction of amine and/or tin salt catalysts the disavantages associated with such products as given above can be avoided.

It is a further object of the present invention to provide a process to manufacture polyurethane products with polyols and copolymer polyols containing autocatalytic activity such that the industrial manufacturing process of the polyurethane product is not adversely affected and may even be improved by the reduction or elimination of amine and/or tin salt catalysts, such that the flexibility to adjust system reactivity depending on desired polyurethane product requirements and processing conditions is maintained.

It is a further object of the present invention to improve the process to manufacture copolymer polyols by reduction or elimination of by-products such as tin salt in the case of PIPA or amine chain transfer agent in case of SAN.

In another aspect, the process of the present invention using the autocatalytic polyol reduces the level of amine catalysts to which workers would be exposed in the atmosphere of a polyurethane products manufacturing plant.

The present invention is a process for the production of polyurethane products by reaction of a mixture of
(a) at least one organic polyisocyanate with
(b) a polyol composition comprising
   (b1) from-0 to 99 percent by weight of a polyol compound having a functionality of 2 to 8 and a hydroxyl number of from 20 to 800 and
   (b2) from 100 to 1 percent by weight of at least one polyol compound having a functionality of 1 to 8 and a hydroxyl number of from 15 to 200,
      wherein the weight percent is based on the total amount of polyol component (b), and (b2) is a copolymer polyol composition comprising solids (b2i) dispersed in a carrier polyol (b2ii) wherein
      (b2) contains at least 2 percent and up to 60 percent solids (b2i) dispersion and at least 2 percent of the carrier polyol (b2ii) is a tertiary amine based polyol (b2iii);
(c) optionally in the presence of a blowing agent; and
(d) optionally additives or auxiliary agents known per se for the production of polyurethane products.

In another embodiment, the present invention is a process as disclosed above wherein the polyisocyanate (a) contains at least one polyisocyanate that is a reaction product of a excess of polyisocyanate with a polyol as defined by (b2).

In a further embodiment, the present invention is a process as disclosed above where the polyol (b) contains a polyol-terminated prepolymer obtained by the reaction of an excess of polyol with a polyisocyanate wherein the polyol is (b2) .

In a further embodiment, part, or the whole, of polyol (b1) can be a tertiary amine based polyol, either identical to (b2iii) or different.

The copolymer polyols (b2) containing tertiary amine polyol (b2iii) as disclosed in the present invention are catalytically active and accelerate the addition reaction of organic polyisocyanates with polyhydroxyl or polyamino compounds and the reaction between the isocyanate and the blowing agent such as water or a carboxylic acid or its salts. The addition of such copolymer polyols (b2) to a polyurethane reaction mixture reduces and even eliminates the need to include a conventional tertiary amine and/or tin salt catalyst within the mixture.

An additional advantage of the present invention is starting from a particular formulation of (b2), foams with different levels of (b2), hence of solids content (for adjustment of foam hardness) can be produced while maintaining the proper catalytic activity in (b). This is done by using polyol (b2iii), or eventually another tertiary amine based -polyol, as a diluent in (b1). A combination of (b2iii) both in the CPP carrier polyol and as a diluent in (b1) is a way to keep the total level of (b2iii) constant when adjusting the solids level in polyurethane formulations to meet the various demands of the market. This is important, for instance, to be able to produce both hard seat cushions and soft backrests on a single line, or to foam at low atmospheric pressure or in intricate molds, without having to rely on any conventional or reactive catalyst adjustment.

In accordance with the present invention, a process whereby polyurethane products with reduced amounts of amine catalyst are produced is described. Furthermore, in the presence of susceptible materials, the polyurethane foams produced in accordance with the invention exhibit a reduced tendency to stain vinyl films or to degrade polycarbonate sheets. This invention eliminates or reduces potential 'blue haze' vision issues with workers exposed to the use of certain tertiary amine catalysts, and foams made therefrom are more environmental friendly by means of the reduction or elimination of amine and/or organometallic catalysts. These advantages are achieved by using (b2iii) as a carrier in the preparation of copolymer polyol (b2), by including in the polyurethane reaction mixture the copolymer polyol (b2), made from tertiary amine based carrier polyol (b2iii), or by using such polyols (b2) in a prepolymer with a polyisocyanate alone or with an isocyanate and a second polyol.

The combination of polyols used in the present invention will be a combination of (b1) and (b2) as described above. As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups per molecule are especially preferred due to their desirable reactivity with polyisocyanates.

Suitable polyols (b1-) that can be used to produce polyurethane materials with the autocatalytic copolymer polyols (b2) of the present invention are well known in the art. Such polyols are-described in Polyurethane handbook, by G. Oertel, Hanser publishers. Mixtures of one or more polyols (b1), and/or one or more copolymer polyols (b2) may also be used to produce polyurethane products according to the present invention.

Representative polyols include polyether polyols; polyester polyols, polyhydroxy-terminated acetal resins, hydroxyl-terminated amines and polyamines. Examples of these and other suitable isocyanate-reactive materials are described more fully in U.S. Patent 4,394,491. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double metal cyanide complex (DMC) catalyst such as zinc hexacyanocobaltate or phosphazenium catalysts as described in EP 897,940.

The polyol or blends thereof employed depends upon the end use of the polyurethane product to be produced. The molecular weight or hydroxyl number of the base polyol may thus be selected so as to result in low density or high density, conventional or high resilient, hot molding or cold molding, flexible or rigid, microcellular or compact foam, elastomer or coating when the polymer/polyol produced from the base polyol is converted to a polyurethane product by reaction with an isocyanate in the presence or not of a blowing agent. The hydroxyl number and molecular weight of the polyol or polyols employed can vary accordingly over a wide range. In general, the hydroxyl number of the polyols employed may range from 15 to 800.

In the production of a flexible polyurethane foam, the polyol is preferably a polyether polyol and/or a polyester polyol. The polyol generally has an average functionality ranging from 2 to 5, preferably 2 to 4, and an average hydroxyl number ranging from 20 to 100 mg KOH/g, preferably from 20 to 70 MgKOH/g. As a further refinement, the choice of base foam application will likewise influence the choice of base polyol. As an example, for molded foam, the hydroxyl number of the base polyol may be on the order of 20 to 60 with ethylene oxide (EO) capping, and for slabstock foams the hydroxyl number may be on the order of 25 to 75 and is either mixed feed EO/PO (propylene oxide) or is only slightly capped with EO.

The initiators for the production of polyols (b1) generally have 2 to 8 functional groups that will react with the polyol. Examples of suitable initiator molecules are water, organic dicarboxylic acids, such as succinic acid, adipic acid, phthalic acid and terephthalic acid, and polyhydric, in particular dihydric to octahydric alcohols or dialkylene glycols, for example ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof.

The copolymer polyols (b2) contain catalytic activity for the production of polyurethane and are referred to herein as having autocatalytic activity, hence can partially or totally replace conventional amine and tin salt catalysts when producing the polyurethane product. Copolymer polyols (b2) are those made from amine based polyols (b2iii) either initiated with a tertiary amine compound or polyols containing a tertiary amine group in the polyol chain or partially capped with a tertiary amine group. Generally, (b2) is added to replace at least 10 percent by weight of amine catalyst while maintaining the same reaction profile. Preferably (b2) is added to replace at least 20 percent by weight of the amine catalyst while maintaining the same reaction profile. More preferably (b2) is added to replace at least 30 percent by weight of the amine catalyst while maintaining the same reaction profile. Most preferred are conditions where (b2) is added to replace at least 50 percent by weight of the amine catalyst while maintaining the same reaction profile.

The amine based polyols can also act as chain transfer agents in the production of copolymer polyols, particulary when the solids are produced from ethylenically unsaturated monomers, such as styrene and acrylonitrile. The use of such polyols will reduce the amount of typical transfer agents used, such as diethylamine or n-dodecyl mercapton, thus reducing the amount of volatile organic compounds in the final product. The use of such polyols will also reduce the by-products which may be formed in the production of PIPA based copolymer polyols. For example, when using an amine based polyol, the use of a tin catalyst, such as tin dibutyl dilaurate, may be reduced or eliminated when producing a PIPA copolymer polyol.

The properties of the tertiary amine based polyols (b2iii) can vary widely as described above for polyol (b1) and such parameters as average molecular weight, hydroxyl number, functionality, etc. will generally be selected based on the end use application of the formulation. Selection of a polyol with the appropriate hydroxyl number, level of ethylene oxide, propylene oxide and butylene oxide, functionality and equivalent weight are standard procedures known to those skilled in the art. Preferably the polyol will have an equivalent weight from 500 to 3,000, optionally from 1,000 to 2,500, and preferably from 1,000 to 2;000 and a functionality of 2-6.

Technologies to manufacture copolymer polyols based on conventional polyols are described, for example, in U.S. Patents 3,304,273 and 4,374,209, EP 0 664 306, DE 2513815 and WO 00/00531. Generally, copolymer polyols are produced by polymerizing one or more ethylenically unsaturated monomers dissolved or dispersed in a polyol (carrier polyol) in the presence of a free radical polymerization initiator to form a stable dispersion of solid polymer particles in the polyol. PIPA and PHD polyols are made by reacting an isocyanate with a molecule containing a reactive hydrogen which has previously been added to the carrier polyol. The present invention substitutes tertiary amine based polyols (b2iii) for all or a portion of the conventional carrier polyol. The copolymer polyol (b2) of the invention contains at least 2 percent and up to 60 percent solids (b2i), preferably 10 to 50, and more preferably 15 to 40 percent solids. The level of tertiary amine based polyol (b2iii) will be at least 2 percent and up to 100 percent, more preferably 25 percent to 100 percent of the carrier polyol (b2ii), more preferably the tertiary amine based polyol (b2iii) will be 50 to 100 percent of the carrier polyol (b2ii).

The production of amine based polyols (b2iii) used as carrier to produce copolymer polyols (b2) can be done by procedures well known in the art as disclosed for (b1). In general, a polyol (b2iii) is made by the addition of an alkylene oxide (EO, PO, or BO), or a combination of alkylene oxides to the tertiary amine initiator by anionic or cationic reaction or use of DMC catalyst, BF3 catalyst or use of phosphazenium catalysts as described in EP 0897940. For some applications only one alkylene oxide monomer is used, for other applications a blend of monomers is used and in some cases a sequential addition of monomers is preferred, such as PO followed by an EO feed, EO followed by PO, etc. Processing conditions such as reactor temperature and pressure, feeding rates and catalyst level are adjusted to optimize production yield and minimize color of the amine based polyol (b2iii). Of particular importance is the polyol unsaturation which is below 0.1 meq/g. Amine initiators used to manufacture the copolymer carrier polyol (b2iii) contain at least one tertiary amine group, more preferably at least one N-methyl amino group, and more preferably at least one N,N-dimethylamino group. Examples of suitable initiators include those disclosed in U.S. Patent 5,476,969, tertiary amine diols as disclosed in EP 0488219 B1 and PCT Publication 01/58976 and PCT Publication 02/22702, the disclosures of which are incorporated herein by reference. Integration of tertiary amine functions in the polyol chain can be done by using an alkylaziridine as a co-monomer when making the polyether polyol. Capping of polyols with a tertiary amine group can be done with the process described in WO 94/02,525, the disclosure of which is incorporated herein by reference.

Examples of commercially available amine initiators include triethylenetetramine, ethylenediamine, N-methyl-1,2-ethanediamine, N-methyl-1,3-propanediamine, N,N-dimethyl-1,3-diaminopropane, N,N-dimethyl-1,4-diaminobutane, N,N-dimethylethanolamine, N,N-dimethyldipropylenetriamine, N,N-dimethyl-tris(hydroxymethyl)aminomethane can be made by methylation of tris-amino, or tris(hydroxymethyl)aminomethane; an aminoalcohol commercially available from ANGUS Chemical, diamino or dihydroxy derivatives of piperazine such as N-bis(2-amino-isobutyl)- piperazine, 3,3'-diamino-N-methyldipropylamine; 2,2'-diamino-N-methyldiethylamine; 2,3-diamino-N-methyl-ethylpropylamine; 3,3'-diamino-N-methyldipropylamine, imidazole and derivatives thereof such as aminopropylimidazole and 2-methylimidazole.

Examples of compounds giving branched or capped tertiary amines are 1-methylaziridine or N,N-dimethyl glycidylamine.

Copolymer polyol (b2) can be made with 100 percent of a tertiary amine based polyol (b2iii) or from a blend of such polyols (b2iii) with a conventional polyol (b1), such as for instance made from glycerol, trimethylol propane, hexitols or sorbitol initiators or blends therefrom, provided that at least 2 percent by weight of the blend is the tertiary amine based polyol (b2iii).

Conversely the copolymer polyol (b2) can be a blend of copolymer polyols made with a tertiary amine based copolymer polyol (b2iii) and/or a conventional copolymer polyol, a conventional polyol and/or a tertiary amine based polyol (b2iii). The ratio between copolymer polyol-(b2) and its diluent polyol (b1), is adjusted to meet the various hardness requirements of a foam production line, the higher the level of (b2) the higher the solids level in the formulation, hence the harder the foam. By addition of a lower amount of (b2) in (b), both the solids content and catalytic activity coming from (b2iii) will be lowered. Hence by the use of (b2iii) as part of the (b1) polyol, using (b2) at various amounts, a change in solids will not affect the whole catalytic activity of the system since (b2iii) as carrier in copolymer polyol can be partially substituted with (b2iii) as a diluent in (b1) when level of (b2) is reduced in the polyurethane formulation. Conversely, (b2iii) as carrier in (b2) is increased when (b2) is increased in the formulatioh and subsequently, (b2iii) as diluent in (b1) can be decreased to maintain system reactivity constant or to adjust the whole system reactivity to new processing conditions. This flexibility of catalytic adjustment cannot be achieved with a copolymer polyol which is not autocatalytic as conventionally used, even when a tertiary amine based polyol is used as a diluent.

The limitations described with respect to the characteristics of the polyols (b1) and (b2) above are not intended to be restrictive but are merely illustrative of the large number of possible combinations for the polyol or polyols used.

The weight ratio of (b1) to (b2) will vary depending on the system reactivity and to the reaction profile required by the specific application. The addition of (b2) will reduce or eliminate the need to use any amine catalyst.

Combination of two or more autocatalytic copolymer polyols of (b2) type can also be used with satisfactory results in a single polyurethane formulation when one wants for instance to adjust blowing and gelling reactions.

Acid neutralization of the polyol (b2iii), prior to making the copolymer polyol made therefrom or afterwards when used as a diluent, or acid neutralization of copolymer (b2), can also be considered when for instance delayed action is of interest. Acids used can be carboxylic acids such as formic acid, salicylic acid, acrylic acid or 2-chloroprionic acid, or a non-organic acid such as phosphoric acid.

Polyols pre-reacted with polyisocyanates and copolymer polyol (b2) with no free isocyanate functions can also be used in the polyurethane formulation. Isocyanate prepolymers based on copolymer polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

The isocyanates which may be used with the autocatalytic polyols of the present invention include aliphatic, cycloaliphatic, arylaliphatic and aromatic isocyanates. Aromatic isocyanates, especially aromatic polyisocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyanates. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used. MDI or TDI based prepolymers can also be used, made either with polyol (b1), polyol (b2iii) or any other polyol as described heretofore. Isocyanate-terminated prepolymers are prepared by reacting an excess of polyisocyanate with polyols, including aminated polyols or imines/enamines thereof, or polyamines. Modified TDI's are mainly toluene diisocyanate containing a small proportion of polymerized TDI. Examples of modified TDI's are Scuranate BT, marketed by Lyondell or Desmodur MT-58; marketed by Bayer.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane-diisocyanate,saturated analogues of the above mentioned aromatic isocyanates and mixtures thereof.

For flexible polyurethane foams, water is preferred as a blowing agent. The amount of water is preferably in the range of from 0.5 to 10 parts by weight, more preferably from 2 to 7 parts by weight based on 100 parts by weight of the polyol. Carboxylic acids or salts are also used as blowing agents and polyols such as (b2) are especially effective for this application.

Use of carbon dioxide, either as a gas or as a liquid, as auxiliary blowing agent, in addition to water, is especially of interest with polyols (b2) as well as either use of methylal or dimethoxymethane by itself or in combination with CO₂ or use of dimethyl carbonate. Use of adjusted atmospheric pressure and/or frothing, as described in U.S. Patent 5,194,453 to vary foam density and comfort, can also be contemplated with the present invention.

In addition to the foregoing critical components, it is often desirable to employ certain other ingredients in preparing polyurethane polymers. Among these additional ingredients are surfactants, preservatives, flame retardants, colorants, antioxidants, reinforcing agents, stabilizers and fillers.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

One or more organometallic catalysts for the reaction of the polyol with the polyisocyanate can be used. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate, as well as other organometallic compounds such as are disclosed in U.S. Patent 2,846,408. A catalyst for the trimerization of polyisocyanates, resulting in a polyisocyanurate, such as an alkali metal alkoxide may also optionally be employed herein. In the event that some amine catalyst is still needed, the amount of amine catalysts can vary from 0.02 to 5 percent in the formulation as well as organometallic catalysts from 0.001 to 1 percent in the formulation can be used.

A crosslinking agent or a chain extender may be added, if necessary. -The crosslinking agent or the chain extender includes low-molecular polyhydric alcohols such as ethylene glycol, diethylene glycol, 1,4-butanediol, or glycerin; low-molecular aminoalcohols such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979 and 4,963,399 and EP 549,120.

Suitable flame retardants include, for example, tricresyl phosphate, tris-(2-chloroethyl)-phosphate, tris-(2-chloropropyl)phosphate, tris-(2,3-dibromopropyl)-phosphate, tris(1,2-dichloropropyl) phosphate and tetrakis-(2-chloroethyl)-ehtylene diphosphate.

In addition to the above mentioned halogen substituted phosphates, inorganic flame retardants may also be used such as red phosphorous, aluminum hydroxide, antimony trioxide, arsenic oxide, aluminum polyphosphate and calcium sulfate; expandable graphite; or cyanuric acid derivatives such as melamine, plus optionally starches for making a foam, particularly a rigid foam, flame resistant. In general when a flame retardant is used, it is present in 1 to 50 parts by weight of the formulation.

Fillers, especially reinforcing fillers, are understood to refer to the known conventional organic and inorganic fillers, reinforcing agent, weighting agent, agents to improve abrasion properties in paints, coatings agents, etc. Specific examples include inorganic fillers, such as silicate minerals, such as layered silicates; for example antigorite, serpentine, hornblends, amphiboles, chrysotile, talc; metal oxides such as kaolin, aluminum oxides, aluminum silicate, titanium oxides and iron oxides, metal salts such as chalk, heavy spar; and inorganic pigments such as cadmium sulfide, zinc sulfide as well as glass particles. Examples of organic fillers include carbon.black, melamine, colophony, cyclopentadienyl resins and graft polymers.

The applications for foams produced by the present invention are those known in the industry. Flexible foams find use in applications such as furniture, mattresses, automobile applications such as seats, sun visors, door linings, noise insulation parts, as visco-elastic foams, packaging parts and filters. Rigid foams are used in thermal insulation and as shock absorption. Integral-skin foams are used in vehicle interiors, such as dashboards and knee bolsters, and in shoe soles.

Processing for producing polyurethane products are well known in the art. In general components of the polyurethane-forming reaction mixture may be mixed together in any convenient manner, for example by using any of the mixing equipment described in the prior art for the purpose such as described in Polyurethane Handbook, by G. Oertel, Hanser publisher.

The polyurethane products are either produced continuously or discontinuously, by injection, pouring, spraying, casting, calendering, etc; these are made under free rise or molded conditions, with or without release agents, in-mold coating, or any inserts or skin put in the mold. Flexible molded foams can be mono- or dual-hardness.

The following example are givin to illustrate the invention and should not be interpreted as limiting in anyway.

Unless stated otherwise, all parts and percentages are given by weight.

A description of the raw materials used in the examples is as follows.
- VORANOL 4820: is a 5,000 MW polyether polyol initiated with glycerol using an EO/PO mixed feed, available from The Dow Chemical Company.
- VORANOL CP 4702: is a 5,000 MN polyether polyol initiated with glycerol which is 17 percent EO capped, available from The Dow Chemical Company.
- Specflex NC 630: is a polyether polyol initiated with a mixture of glycerol and sucrose available from The Dow Chemical Company.
- Jeffamine T5000: is a 5,000 MW triol initiated with glycerol and primary amine capped available from Hunstman Corporation.
- Specflex NC 700: is a 40 percent SAN copolymer polyol made from a glycerine started polyol, available from The Dow Chemical Company.
- Niax Y-10184: is a silicone surfactant available from Crompton Corporation.
- Niax A-1: is a tertiary amine catalyst
- Dabco 33 LV: is a tertiary amine catalyst available from Air Products and Chemicals Inc.
- TEOA: is pure triethanolamine.
- DEOA: is pure diethanolamnine.
- DEA: is N,N-diethylamine.
- DBTDL 10 percent: 10 percent by weight dilution of Dibutyl tin dilaurate in VORANOL 4820.
- VORANATE T-80: is TDI 80/20 available from The Dow Chemical Company.
- Polyol A: is a 1,000 equivalent weight (EW) triol 13 percent EO and 87 percent PO mixed feed initiated with N- methyl-1,3-propylenediamine.
- Polyol B: is a 1,700 EW propoxylated tetrol with 17.5 percent EO capping initiated with 3,3'-diamino-N- methyldipropylamine.
- Copolymer Polyol C: is a 40.1 percent SAN copolymer polyol made using Polyol B as the carrier polyol.
- Polyol D: is a 2,000 EW propoxylated hexol initiated with triethylenetetramine and with 15 percent EO capping.
- Copolymer Polyol E: is a 40 percent copolymer polyol made with Polyol D as the carrier polyol.
- Polyol F: is a 1,700 EW propoxylated tetrol with 11.5 EO and 88.5 percent PO mixed feed, initiated with 3,3- diamino N-methyldipropylamine.
- Polyol G: is a 1,700 EW propoxylated triol with.15 percent EO capping initiated with N,N-dimethyl dipropylene
- Polyol H: triamine. is a 1,700 EW propxylated triol with 15 percent EO capping initiated with N-methyl-1,3-propylenediamine.
- Polyol I: is a 1,700 EW propoxylated triol with 15 percent EO capping initiated with N,N-dimethyl- tris(hydroxymethyl) aminomethane.
- Polyol J: is same as Polyl B but with 15 percent EO capping.
- Polyol K: is a 5,000 MW propoxylated triol initiated with glycerol and capped with 17.5 percent EO.

All free-rise foams were made in the laboratory by bucket foaming according to the following procedure: pre-blending 600 grams polyols with surfactants, eventually catalysts and water, then mixing for 15 seconds at 1,800 RPM using a pin type mixer. The tin catalyst, dispensed by volume, was then added to the stirred components and mixed for an additional 15 seconds at 1,800 RPM. The required amount of TDI was then added to the cup and vigorously mixed for 5 seconds at 2,400 RPM. The cup contents are then poured into a 5 gallon (imperial) sized bucket. The cream time, blow off, degree of foam settling and any distinct reaction characteristics are recorded. The foam buns are allowed to cure overnight under a ventilated fume hood. They are then placed in ambient storage and six days after foaming are submitted to conditioning and foam testing according to ASTM D 3574-83 test methods.

Molded foams were made by mixing components conditioned at 25°C at 1,800 RPM and pouring in a 9 liter aluminum mold heated at 60°C. Demolding time was 4 minutes. The mold filling time is recorded when foaming mass goes through the vent holes.

### Example 1

### Preparation of PIPA copolymer polyol

Polyol A was used in a PIPA formulation according to the following procedure: 80 grams of Voranol 4820, conditioned at 25°c, were mixed with 4.69 grams of pure TEOA at 2,000 RPM for 30 seconds at room temperature. Then 5.31 grams of Voranate T-80 were added and mixed again for 30 seconds at 2,000 RPM. Finally 10 grams of polyol A were poured in this blend which was once more stirred for 30 seconds at 2,000 RPM. After about 30 minutes the liquid became cloudy while temperature rose, indicating the formation of PIPA particles in the polyol blend. These results show that a PIPA copolymer polyol can be produced in the absence of a tin catalyst, DBTDL (tin dibutyl dilaurate) generally used to catalyze the isocyanate TEOA reaction in polyol. No settling was observed subsequently confirming that a good PIPA copolymer polyol can be produced using polyol A without the need for DBTDL.

### Example 2

The copolymer polyol was prepared by a continuous polymerization system, using a tank reactor fitted with baffles and impeller. The feed components were plumped into the reactor continuously after going through an in line mixer to assure complete mixing of the feed components before entering the reactor. The contents of the reactor were well mixed and controlled at a temperature of about 130°C. The product flowed out the top of the reactor and into a second unagitated reactor. The product then flowed out the top of the second reactor continuously through a back pressure regulator that had been adjusted to give about 58 psi (0.4 Mpa) pressure on both reactors. The crude polymer polyol product then flowed through a cooler into a collection vessel. The crude product was vacuum stripped to remove volatiles before testing.

A high solids SAN based copolymer Polyol C was produced with the following formulation (all components in percent by weight) :

| | |
|---|---|
| Polyol B | 52.07 |
| Styrene | 25.59 |
| Acrylonitrile | 17.06 |
| Stabilizer | 0.50 |
| catalyst | 0.12 |
| seed | 3.97 |
| Chain transfer agent | 0.69 |

The seed is a 8 percent SAN based copolymer polyol made with Voranol CP 4702 and with particle size below one micron. The chain transfer agent is DEA, a secondary amine, and the catalyst is a peroxide.

This SAN based copolymer Polyol C made with Polyol B' had a viscosity of 10,060 mPa.s at 25°C and average particle size of 1.36 microns. This copolymer polyol showed good filterability properties equivalent to Specflex NC-700, a conventional copolymer polyol. This filterability test is described in WO 00/00531 page 13.

### Example 3

A flexible foam was produced with copolymer Polyol C and compared with a foam (comparative A) made with Specflex NC 700. The formulations used are as follows:

| Formulation | Example 3 | Comparative example A* |
|---|---|---|
| Specflex NC 630 | 62.5 | 62.5 |
| Copolymer Polyol C | 37.5 | |
| Specflex NC 700 | | 37.5 |
| Niax Y-10184 | 1.2 | 1.2 |
| DEOA | 1.6 | 1.6 |
| Dabco 33 LV | 0.17 | 0.35 |
| Niax A-1 | 0.04 | 0.08 |
| Water | 4.2 | 4.2 |
| TDI index | 105 | 105 |
| percent SAN solids in polyol blend | 15 | 15 |
| | | |
| Rise time (s) | 135 | 135 |
| Foam stability | OK | OK |
| Internal foam stability | OK | OK |

| | | |
|---|---|---|
| * is not part of this invention | | |

These results demonstrate that the use of copolymer Polyol C made with Polyol B provides sufficient catalytic activity to eliminate 50 percent of the amine catalyst system as compared with comparative example A using conventional copolymer polyol and that good foam is produced from the comparable reactivity and stability.

### Example 4

A copolymer Polyol E was made using Polyol D as the carrier polyol. Formulations and conditions were similar to Example 2. Product properties were as follows:
Solids 37.3 percent
viscosity 14,600 mPa.s
particle size 1.35 microns.
A comparative copolymer polyol, comparative B (not part of this invention) was made using Jeffamine T5000 as the carrier polyol. Poor conversion of the styrene-acrylonitrile was obtained giving an unacceptable product with low solids.

### Examples 5, 6, 7, 8 Preparation of PIPA copolymer polyols

The following procedure was followed to prepare PIPA copolymer polyols with all raw materials conditioned at 25°C: weighing of 160 grams of polyol in a 300 ml cup, addition of 9.38 grams of TEOA and mixing at 2,000 RPM for 30 seconds. Then addition of 10.62 grams of Voranate T-80 and mixing again at 2,000 RPM for 30 seconds. Recording of exotherm, of time for the blend to become cloudy and measurement of viscosity after 48 hours and 3 months storage.

| Example | 5 | 6 | 7 | 8 | *comparative 8 |
|---|---|---|---|---|---|
| Voranol 4820 | | | | | 160 |
| Polyol F | 160 | | | | |
| Polyol G | | 160 | | | |
| Polyol H | | | 160 | | |
| Polyol I | | | | 160 | |
| DBTDL 10 percent | | | | | 2.0 |
| Temperature at 10 minutes deg C | 42.4 | 46.6 | 43.7 | 44.7 | 47.3 |
| Time to cloudiness minutes | 1 | 6 | 6 | 4 | 1 |
| Viscosity mPa.s at 25°C (48 hours) | 4,300 | 66,575 | 26,680 | 29,975 | 3,010 |
| Viscosity 3 months | 4,290 | 53,865 | 31,500 | 29,115 | 3,225 |

| | | | | | |
|---|---|---|---|---|---|
| * comparative 8 not part of this invention | | | | | |

These examples, 5, 6, 7 and 8, show that good PIPA copolymer polyols are obtained with polyols (b2iii) replacing tin salt catalyst when using at room temperature low reactivity TEOA as the monomer.

### Examples 9, 10, 11 and 12

The PIPA copolymer polyols of examples 5, 6, 7 and 8 were foamed, examples 9, 10, 11 and 12, using a formulation based on 50 parts of Specflex NC-632 (a high functionality polyol, similar to Specflex NC-630, available from The Dow Chemical Company), 30 parts of Specflex NC-700, Niax A-1 at 0.05 parts; Dabco 33 LV at 0.40 parts, DEOA LFG 85 (85 percent dilution of DEOA in water) at 0.8 parts; Dabco DC 5169 (a silicone surfactant available from Air Products and Chemicals Inc) and Voranate T-80 at index 100:

| Example | 9 | 10 | 11 | 12 | *Comparative 12 |
|---|---|---|---|---|---|
| * PIPA comparative example 8 | | | | | 20 |
| PIPA Example 5 20 | | | | | |
| PIPA Example 6 | | 20 | | | |
| PIPA Example 7 | | | 20 | | |
| PIPA example 8 | | | | 20 | |
| Mold exit time (s) | 21 | 15 | 21 | 15 | 23 |
| Part weight (g) | 351 | 348 | 337 | 350 | 356 |

| | | | | | |
|---|---|---|---|---|---|
| Comparative 12 not part of this invention | | | | | |

These examples 9, 10, 11 and 12 show that good foams are obtained with the PIPA copolymer polyols and that their autocatalytic effect is demonstrated by the faster mold exit times versus the conventional PIPA copolymer polyol containing DBTDL.

### Examples 13 and 14

Two SAN based copolymer polyols were made according to process and formulation described in example 2 above using Polyol J as the feedstock polyol and two levels of DEA, the DEA acting as a chain transfer agent. Data reported in table below show that both levels of DEA gave good filterability and low particle size when Polyol J was used while particle size and product viscosity went up dramatically in standard Polyol K when DEA was reduced.

| Example | 13 | 14 | 13* | 14* |
|---|---|---|---|---|
| Feedstock polyol | Polyol J | Polyol J | Polyol K | Polyol K |
| DEA level (percent) | 0.7 | 0.3 | 0.7 | 0.3 |
| Filterability | 100 | 100 | 100 | 100 |
| Particle size (micron) | 1.24 | 1.6 | 1.16 | 3.0 |
| Viscosity at 25 deg C (m.Pa.s) | 10,600 | 11,000 | 6,720 | 11,000 |

| | | | | |
|---|---|---|---|---|
| *comparative examples, not part of this invention | | | | |

Examples 13 and 14 confirm that Polyol J acts as a chain transfer agent and can replace more than 50 percent of the DEA amine chain transfer agent when manufacturing the SAN copolymer polyol, hence can reduce substantially a volatile component in the formulation recipe.

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for the production of polyurethane products by reaction of a mixture of
(a) at least one organic polyisocyanate with
(b) a polyol composition comprising
(b1) from 0 to 99 percent by weight of a polyol compound having a functionality of 2 to 8 and a hydroxyl number of from 20 to 800 and
(b2) from 100 to 1 percent by weight of at least one polyol compound having a functionality of 1 to 8 and a hydroxyl number of from 15 to 200,
wherein the weight percent is based on the total amount of polyol component (b), and (b2) is a copolymer polyol composition comprising copolymer solids (b2i) dispersed in a carrier polyol (b2ii) wherein
(b2) contains at least 2 percent and up to 60 percent solids (b2i) dispersion and at least 2 percent of the carrier polyol (b2ii) is a tertiary amine based polyol (b2iii);
(c) optionally in the presence of a blowing agent;
and
(d) optionally additives or auxiliary agents known se for the production of polyurethane products
wherein the amine based carrier polyol (b2iii) is made from an amine initiator which contains at least one N- methyl amino group or N,N-dimethylamino group.

2. The process of Claim 1 wherein the carrier polyol (b2iii) has a functionality of from 2 to 6.

3. The process of Claim 2 wherein the carrier polyol (b2iii) has an equivalent weight of from 500 to 3000.

4. The process of Claim 3 wherein the carrier polyol has an equivalent weight from 1000 to 2000.

5. The process of Claim 1 wherein the solids content (b2i) in the copolymer polyol is from 10 to 60 percent.

6. The process of Claim 5 wherein the solids content (b2i) in the copolymer polyol is from 10 to 50 percent.

7. The process of Claim 1 wherein the solids (b2i) of (b2) are either based on polymers of styrene and/or acrylonitrile, polyurea, polyisocyanate polyaddition product, epoxide or a mixture thereof.

8. The process of Claim 1 wherein the mixture further contains flame retardant agents.

9. The process of Claim 1 wherein the foam hardness and reactivity of the polyurethane foaming systems is adjusted by varying the ratio between copolymer polyol (b2) and polyol (b2iii) by using (b2iii) as part of (b1) in the formulation.

10. A polyurethane product prepared by the process of Claim 1.

11. A polymer polyol composition produced by a free radical polymerization comprising:
(a) a polyol
(b) at least one ethylenically unsaturated monomer;
(c) a free radical polymerization initiator and
(d) a chain transfer agent
wherein the chain transfer agent is tertiary amine based polyol produced from an amine initiator having at least one N-methyl amino group, or N,N- dimethyl amino group.

## Patentansprüche

1. Verfahren zur Herstellung von Polyurethanprodukten durch Umsetzen einer Mischung von
(a) mindestens einem organischen Polyisocyanat mit
(b) einer Polyolzusammensetzung, die Folgendes umfasst:
(b1) von 0 bis 99 Gew.-% einer Polyolverbindung mit einer Funktionalität von 2 bis 8 und einer Hydroxylzahl von 20 bis 800, und
(b2) von 100 bis 1 Gew.-% mindestens einer Polyolverbindung mit einer Funktionalität von 1 bis 8 und einer Hydroxylzahl von 15 bis 200,
wobei sich die Gewichtsprozent auf die Gesamtmenge der Polyolkomponente (b) beziehen und (b2) eine Copolymer-Polyolzusammensetzung ist, die Copolymerfeststoffe (b2i) umfasst, die in einem Trägerpolyol (b2ii) dispergiert sind, wobei
(b2) mindestens 2 Prozent und bis zu 60 Prozent Feststoffe (b2i) in Dispersion enthält und mindestens 2 Prozent des Trägerpolyols (b2ii) ein Polyol auf Basis eines tertiären Amins (b2iii) ist;
(c) optional in Gegenwart eines Treibmittels; und
(d) optional mit an sich bekannten Zusatzstoffen oder Hilfsstoffen für die Herstellung von Polyurethanprodukten,
wobei das aminbasierte Trägerpolyol (b2iii) aus einem Amininitiator besteht, der mindestens eine N-Methylaminogruppe oder N,N-Dimethylaminogruppe enthält.

2. Verfahren nach Anspruch 1, wobei das Trägerpolyol (b2iii) eine Funktionalität von 2 bis 6 hat.

3. Verfahren nach Anspruch 2, wobei das Trägerpolyol (b2iii) ein Äquivalentgewicht von 500 bis 3000 hat.

4. Verfahren nach Anspruch 3, wobei das Trägerpolyol ein Äquivalentgewicht von 1000 bis 2000 hat.

5. Verfahren nach Anspruch 1, wobei der Feststoffgehalt (b2i) in dem Copolymerpolyol von 10 bis 60 Prozent beträgt.

6. Verfahren nach Anspruch 5, wobei der Feststoffgehalt (b2i) in dem Copolymerpolyol von 10 bis 50 Prozent beträgt.

7. Verfahren nach Anspruch 1, wobei die Feststoffe (b2i) von (b2) entweder auf Polymeren von Styrol und/oder Acrylnitril, Polyharnstoff, Polyisocyanatpolyadditionsprodukt, Epoxid oder einer Mischung davon basieren.

8. Verfahren nach Anspruch 1, wobei die Mischung ferner Flammschutzmittel enthält.

9. Verfahren nach Anspruch 1, wobei die Schaumhärte und Reaktivität der Polyurethanschaumsysteme eingestellt wird durch Variieren des Verhältnisses zwischen dem Copolymerpolyol (b2) und Polyol (b2iii) unter Verwendung von (b2iii) als Bestandteil von (b1) in der Formulierung.

10. Polyurethanprodukt, das nach dem Verfahren von Anspruch 1 hergestellt ist.

11. Polymerpolyolzusammensetzung, die durch radikalische Polymerisation hergestellt ist, umfassend:
(a) ein Polyol,
(b) mindestens ein ethylenisch ungesättigtes Monomer,
(c) einen radikalischen Polymerisationsinitiator, und
(d) ein Kettenübertragungsmittel,
wobei das Kettenübertragungsmittel ein auf tertiärem Amin basierendes Polyol ist, das aus einem Amininitiator mit mindestens einer N-Methylaminogruppe oder N,N-Dimethylaminogruppe hergestellt ist.

## Revendications

1. Procédé de production de produits en polyuréthane, par réaction d'un mélange
a) d'au moins un polyisocyanate organique
b) et d'une composition de polyols comprenant
b1) de 0 à 99 % en poids d'un composé de type polyol comportant 2 à 8 groupes fonctionnels et présentant un indice d'hydroxyle de 20 à 800,
b2) et de 100 à 1 % en poids d'au moins un composé de type polyol comportant 1 à 8 groupes fonctionnels et présentant un indice d'hydroxyle de 15 à 200,
étant entendu
que ces pourcentages en poids sont rapportés à la quantité totale de composant (b) de type polyol,
que le composant (b2) est une composition polymère-polyol qui comprend un polymère à l'état de solides (b2i) dispersés dans un polyol véhiculeur (b2ii),
que le composant (b2) contient au moins 2 % et au plus 60 % de solides (b2i) en dispersion,
et qu'une fraction d'au moins 2 % du polyol véhiculeur (b2ii) est un polyol à base d'amine tertiaire (b2iii),
réaction réalisée en présence
c) en option, d'un agent d'expansion,
d) et en option, d'adjuvants ou d'auxiliaires connus comme pouvant servir à la production de produits en polyuréthane,
et dans lequel procédé le polyol véhiculeur à base d'amine (b2iii) utilisé a été préparé à partir d'un amorceur de type amine qui comportait au moins un groupe N-méthyl-amino ou N,N-diméthyl-amino.

2. Procédé conforme à la revendication 1, dans lequel le polyol véhiculeur (b2iii) comporte 2 à 6 groupes fonctionnels.

3. Procédé conforme à la revendication 2, dans lequel le polyol véhiculeur (b2iii) présente un poids d'équivalent de 500 à 3000.

4. Procédé conforme à la revendication 3, dans lequel le polyol véhiculeur présente un poids d'équivalent de 1000 à 2000.

5. Procédé conforme à la revendication 1, dans lequel la teneur en solides (b2i) de la composition polymère-polyol vaut de 10 à 60 %.

6. Procédé conforme à la revendication 5, dans lequel la teneur en solides (b2i) de la composition polymère-polyol vaut de 10 à 50 %.

7. Procédé conforme à la revendication 1, dans lequel les solides (b2i) de la composition (b2) sont à base de polymères de styrène et/ou d'acrylonitrile, de polyurée, de produits de polyaddition de type polyisocyanate ou de résines époxy, ou d'un mélange de tels polymères.

8. Procédé conforme à la revendication 1, dans lequel le mélange contient en outre des agents ignifugeants.

9. Procédé conforme à la revendication 1, dans lequel on ajuste la dureté de la mousse et la réactivité du système de préparation de mousse de polyuréthane en faisant varier le rapport entre la composition polymère-polyol (b2) et le polyol (b2iii) en utilisant du polyol (b2iii) pour une partie du composant (b1) de la formulation.

10. Produit en polyuréthane, préparé selon un procédé conforme à la revendication 1.

11. Composition polymère-polyol produite par polymérisation radicalaire, comprenant :
a) un polyol,
b) au moins un monomère à insaturation éthylénique,
c) au moins un amorceur de polymérisation radicalaire,
d) et un agent de transfert de chaînes,
dans laquelle l'agent de transfert de chaînes est un polyol à base d'amine tertiaire, préparé à partir d'un amorceur de type amine qui comportait au moins un groupe N-méthyl-amino ou N,N-diméthyl-amino.
